# EUROPÄISCHE PATENTSCHRIFT

(11) **EP 4 077 024 B1**
(45) Veröffentlichungstag und Bekanntmachung des Hinweises auf die Patenterteilung: **11.12.2024**
(21) Anmeldenummer: 20829556.8
(22) Anmeldetag: 11.12.2020
(51) Int. Cl.: B60L 5/22, B60L 5/24, B60L 5/28, B61C 3/00, B61C 17/00, B60M 1/13, B60M 1/30

(54) **WIPPE FÜR EINEN STROMABNEHMER EINES FAHRZEUGS**
PANTOGRAPH FOR CURRENT COLLECTOR OF A VEHICLE
PANTOGRAPHE POUR UN COLLECTEUR DE COURANT D'UN VÉHICULE

(30) Priorität: 17.12.2019 AT 511022019
(43) Veröffentlichungstag der Anmeldung: 26.10.2022
(73) Patentinhaber: Siemens Mobility Austria GmbH, 1210 Wien (AT)
(72) Erfinder: ZEMANN, Richard, 2100 Korneuburg (AT); REICHARDT, Walter, 7091 Breitenbrunn (AT); SALIGER, Christian, 1130 Wien (AT)
(74) Vertreter: Siemens Patent Attorneys
(86) Internationale Anmeldenummer: PCT/EP2020/085765
(87) Internationale Veröffentlichungsnummer: WO 2021/122375

(56) Entgegenhaltungen:
- WO-A1-02/32714
- CN-U- 205 220 391
- CN-Y- 2 435 270
- DE-B4- 4 219 112
- US-A1- 2002 086 558
- US-A1- 2016 257 205

## Beschreibung

Die Erfindung betrifft eine Wippe für einen Stromabnehmer eines Fahrzeugs, mit zumindest einer ersten Schleifleiste, welche mit einer ersten Hebelanordnung, welche mit einer ersten Lagervorrichtung gekoppelt ist, sowie mit einer zweiten Hebelanordnung, welche mit einer zweiten Lagervorrichtung gekoppelt ist, verbunden ist, wobei die erste Lagervorrichtung und die zweite Lagervorrichtung gelenkig mit einem Stromabnehmergestänge verbindbar sind.

Elektrisch betriebene Fahrzeuge weisen häufig Stromabnehmer (z.B. Einholm- oder Scherenstromabnehmer etc.) auf, mittels welchen eine Stromabnahme von einem Fahrdraht oder von einer Stromschiene etc. sowie eine Versorgung von elektrischen Antrieben der Fahrzeuge mit Elektrizität erfolgt. Insbesondere bei hohen Fahrgeschwindigkeiten wirken große Kräfte auf einen Stromabnehmer. Dabei handelt es sich einerseits um Kontaktkräfte zwischen Schleifleisten einer Wippe des Stromabnehmers und dem Fahrdraht oder der Stromschiene etc. und andererseits um aerodynamische Kräfte aus Staudrücken.

Es ist daher wichtig, die Wippe, welche über eine oder mehrere Schleifleisten den Fahrdraht oder die Stromschiene etc. kontaktiert, effektiv zu federn, um ein Stromabnehmergestänge zu entlasten und Kontaktverluste zwischen dem Stromabnehmer und dem Fahrdraht oder der Stromschiene etc. zu vermeiden.

Aus dem Stand der Technik ist beispielsweise die EP 2 644 433 A2 bekannt, welche einen Stromabnehmer mit einem Stromabnehmergestänge und einer kippbaren Wippe zeigt, welche über Schleifleisten an einem Fahrdraht anliegt. Das Stromabnehmergestänge weist einen Oberarm und einen Unterarm sowie ein pneumatisches Stellglied auf, trägt die Wippe und ist gelenkig auf einem Fahrzeug gelagert. Über das Stellglied kann die Wippe gehoben und gesenkt werden.

Weiterhin beschreibt die WO 02/32714 A1 eine Rahmenwippe für einen Stromabnehmer eines elektrischen Fahrzeugs, wobei zwei versteifte Rahmen gelenkig mit zwei Schleifleisten verbunden sind. Die Rahmen weisen Rahmenrohre auf, in welchen Torsionsfedern verlaufen. Über diese Torsionsfedern ist die Wippe mit einer Scheitelwelle des Stromabnehmers verbunden. Eine erste Torsionsfeder ist hierbei mit einem ersten Ende der Scheitelwelle gekoppelt, eine zweite Torsionsfeder mit einem zweiten Ende der Scheitelwelle. Die Torsionsfedern sind über Lagerelemente drehfest mit Haltestücken, welche mit der Scheitelwelle verbunden sind, verbunden.

Darüber hinaus zeigt die EP 0 844 131 A1 ebenfalls eine Rahmenwippe mit Schleifleisten für einen Stromabnehmer eines elektrischen Fahrzeugs. Die Schleifleisten sind über U-förmige Federbügel, deren Schenkel quer zu einer Fahrzeuglängsrichtung verlaufen, starr mit Halteelementen, welche mit einer Scheitelwelle des Stromabnehmers verbunden sind, verbunden.

Ferner offenbart die EP 1 361 103 B1 eine Wippe für einen Stromabnehmer eines elektrischen Fahrzeugs, welche über Hebeleinrichtungen, Wellen sowie unabhängig von den Wellen ausgeführten Federn mit einem Oberarm des Stromabnehmers verbunden ist. Die Wellen sind in Tragrohren axial sowie radial gelagert. Über die Hebeleinrichtungen werden Drehmomente in die Welle eingeleitet, entsprechende Reaktionsmomente werden von den Federn gebildet, wobei die Federn einerseits mit den Wellen und andererseits mit den Tragrohren verbunden sind. Die US 2002/086558 A1 offenbart einen Stromabnehmer für ein Schienenfahrzeug, wobei eine Wippe mit Schleifleisten mit einem Stromabnehmergestänge gekoppelt ist, gemäß dem Stand der Technik.

Die genannten Ansätze weisen in ihren bekannten Formen den Nachteil auf, dass die Wippen oder die Schleifleisten gegenüber Gestängen bzw. Oberarmen oder Scheitelwellen keine ausgeprägte Beweglichkeit aufweisen und dass Verformungen kaum kompensiert werden oder/und dass zwischen Wippe und Oberarm aufwendige Lageranordnungen, welche beispielsweise Wellen und Federn aufweisen, vorgesehen sind.

Der Erfindung liegt die Aufgabe zugrunde, eine gegenüber dem Stand der Technik weiterentwickelte Wippe anzugeben, welche konstruktiv einfach und dennoch belastungsgerecht, auch im Hinblick auf dynamische Belastungen, ausgeführt ist.

Erfindungsgemäß wird diese Aufgabe gelöst mit einer Wippe der eingangs genannten Art, bei der eine erste Torsionsfeder fest mit einem Hebel der ersten Hebelanordnung sowie drehfest über eine verschiebliche Lagerung mit der ersten Lagervorrichtung verbunden ist oder die erste Torsionsfeder drehfest über eine verschiebliche Lagerung mit einem Hebel der ersten Hebelanordnung sowie fest mit der ersten Lagervorrichtung verbunden ist, wobei die erste Torsionsfeder zugleich Drehmomentübertragevorrichtung und Federvorrichtung zwischen der ersten Hebelanordnung und der ersten Lagervorrichtung ist.

Dadurch wird eine besonders leichte, kompakte sowie dennoch robuste und verschleißarme Anordnung zur Stromabnahme erzielt. Auf aufwendige Lageranordnungen zwischen der Wippe und dem Stromabnehmergestänge, z.B. mit Schraubenfedern ummantelte Wellen, kann verzichtet werden. Die erfindungsgemäße Anordnung kann mit einer geringen Anzahl an Bauteilen, die noch dazu eine geringe Bauteilkomplexität aufweisen, ausgeführt werden.

Die erste Torsionsfeder fungiert zugleich als Drehmomentübertragevorrichtung und als Federvorrichtung. Von einem Fahrdraht oder einer Stromschiene über die erste Schleifleiste übertragene Kontaktkräfte werden über die erste Hebelanordnung in die erste Torsionsfeder eingeleitet. Aufgrund anliegender Torsionsmomente wird die erste Torsionsfeder verdrillt. Aufgrund einer entsprechenden Torsionsfedersteifigkeit wirken entsprechende Reaktionsfederkräfte gegen die anliegenden Torsionsmomente. Belastungs- und Entlastungsvorgänge der ersten Schleifleiste sowie der ersten Hebelanordnung werden gefedert, wodurch eine mechanisch entkoppelte Wippenlagerung erreicht wird.

Von auf die Wippe wirkenden Kräfte in Fahrzeuglängsrichtung und in Fahrzeugquerrichtung ist die erste Torsionsfeder entkoppelt.

Diese Wippenlagerung ist an von den Kontaktkräften und den aerodynamischen Kräften verursachte Belastungen, auch dynamische Belastungen mit hoher Frequenz, angepasst. Längenänderungen der ersten Torsionsfeder, z.B. verursacht durch Torsion der ersten Torsionsfeder, werden aufgrund der verschieblichen Lagerung ausgeglichen. Dadurch wird eine Entlastung der Wippe bewirkt und es werden Schäden, insbesondere bei starken und/oder hochfrequenten Belastungen vermieden.

Es ist günstig, wenn die erste Torsionsfeder formschlüssig und vorgespannt gelagert ist.

Ist die erste Torsionsfeder fest mit einem Hebel der ersten Hebelanordnung verbunden, so werden durch diese Maßnahme Montage- und Demontagevereinfachungen bewirkt. Die erste Hebelanordnung oder ein Hebel der ersten Hebelanordnung muss zur Montage lediglich mit der darauf vormontierten ersten Torsionsfeder in die erste Lagervorrichtung eingefädelt werden und anschließend mit der Lagervorrichtung verbunden werden.

Eine Vorspannung der ersten Torsionsfeder bewirkt ein an einen definierten Lastfall angepasstes Federungsverhalten.

Eine vorteilhafte Ausgestaltung erhält man, wenn die erste Lagervorrichtung ein Spannstück aufweist, mit welchem die erste Torsionsfeder verbunden ist.

Dadurch wird eine günstige Modularität der Wippenlagerung erzielt. Es wird beispielsweise ermöglicht, das Spannstück unter Beibehaltung der mit dem Stromabnehmergestänge verbindbaren ersten Lagervorrichtung nachträglich zu tauschen, um die erste Torsionsfeder durch eine andere Torsionsfeder (z.B. aus Verschleißgründen oder aufgrund einer Veränderung des Lastfalls) zu ersetzen.

Es ist hilfreich, wenn die erste Lagervorrichtung ein erstes Gehäuse aufweist, wobei die erste Torsionsfeder innerhalb des ersten Gehäuses angeordnet ist.

Durch diese Maßnahme ist die erste Torsionsfeder vor Umgebungseinflüssen (z.B. Feuchtigkeit und Partikel etc.) geschützt.

Um eine einfache und rasche Tauschbarkeit des Spannstücks und der ersten Torsionsfeder zu fördern und zugleich auch das Spannstück vor Umgebungseinflüssen zu schützen, kann weiterhin vorgesehen sein, dass das Spannstück drehfest sowie lösbar mit dem ersten Gehäuse verbunden ist und innerhalb des ersten Gehäuses angeordnet ist.

Die einfache und rasche Tauschbarkeit der ersten Torsionsfeder wird weiter verbessert, wenn eine erste Aufnahmevorrichtung drehfest mit einem Hebel der ersten Hebelanordnung und drehbar mit dem ersten Gehäuse verbunden ist, wobei die erste Torsionsfeder über die erste Aufnahmevorrichtung mit der ersten Hebelanordnung verbunden ist.

Die erste Aufnahmevorrichtung fungiert somit als Adapter für die erste Torsionsfeder einerseits und die erste Hebelanordnung andererseits.

Eine vorteilhafte Lösung wird erzielt, wenn eine zweite Schleifleiste vorgesehen ist, welche mit einer dritten Hebelanordnung, welche mit der ersten Lagervorrichtung gekoppelt ist, sowie mit einer vierten Hebelanordnung, welche mit der zweiten Lagervorrichtung gekoppelt ist, verbunden ist, wobei eine dritte Torsionsfeder, welche zugleich Drehmomentübertragevorrichtung und Federvorrichtung zwischen der dritten Hebelanordnung und der ersten Lagervorrichtung ist, fest mit einem Hebel der dritten Hebelanordnung sowie drehfest über eine verschiebliche Lagerung mit der ersten Lagervorrichtung verbunden ist oder drehfest über eine verschiebliche Lagerung mit einem Hebel der dritten Hebelanordnung sowie fest mit der ersten Lagervorrichtung verbunden ist.

Dabei ist es günstig, wenn die dritte Torsionsfeder mit dem Spannstück verbunden ist.

Aufgrund einer Trennung der ersten Torsionsfeder und der dritten Torsionsfeder mittels des Spannstücks können sich die erste Torsionsfeder und die dritte Torsionsfeder annähernd unabhängig voneinander an jeweilige Belastungsverhältnisse auf die erste Schleifleiste und die zweite Schleifleiste anpassen, wodurch die erfindungsgemäße Wippe eine geringe Neigung zu Überlastung, dadurch verursachten Schäden sowie eine geringe Neigung zu übermäßigem Verschleiß aufweist.

Nachfolgend wird die Erfindung anhand von Ausführungsbeispielen näher erläutert.

Es zeigen beispielhaft:
- Fig. 1:: Eine schematische Darstellung eines beispielhaften Stromabnehmers als Seitenriss,
- Fig. 2:: Eine schematische Darstellung einer beispielhaften ersten Ausführungsvariante einer erfindungsgemäßen Wippe als erster Seitenriss, wobei eine erste Schleifleiste sichtbar ist,
- Fig. 3:: Eine schematische, geschnittene Darstellung der beispielhaften ersten Ausführungsvariante einer erfindungsgemäßen Wippe als zweiter Seitenriss, wobei eine erste Schleifleiste und eine zweite Schleifleiste sichtbar sind und wobei Torsionsfederelemente über verschiebliche Lagerungen mit einem Spannstück verbunden sind, und
- Fig. 4:: Eine schematische, geschnittene Darstellung eines Ausschnitts aus einer beispielhaften zweiten Ausführungsvariante einer erfindungsgemäßen Wippe als Seitenriss, wobei eine erste Schleifleiste und eine zweite Schleifleiste sichtbar sind und wobei Torsionsfederelemente über verschiebliche Lagerungen mit Hebelanordnungen verbunden sind.

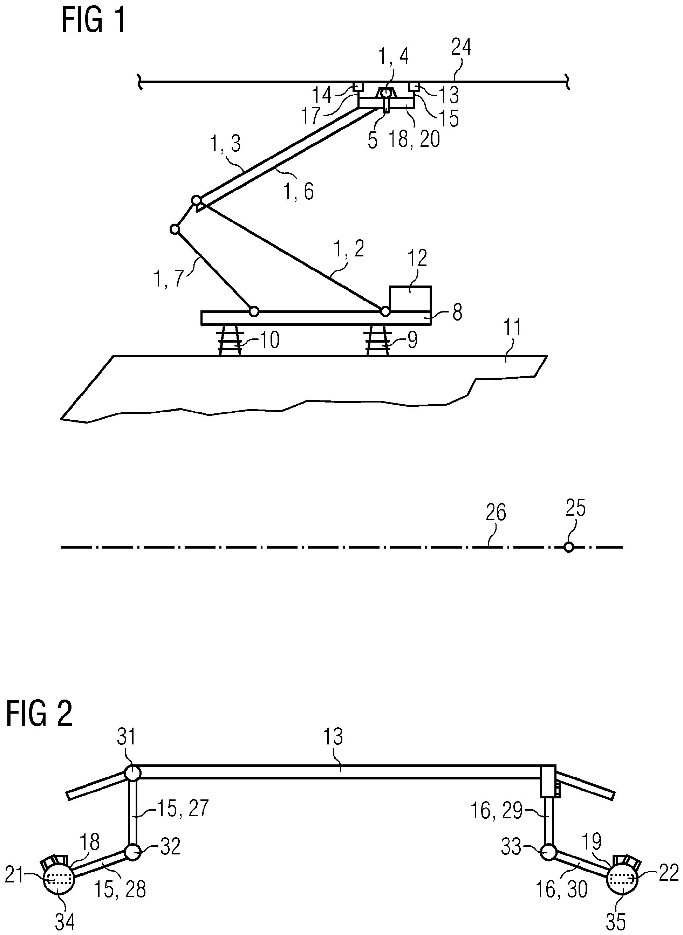

Ein in Fig. 1 dargestellter schematischer Seitenriss zeigt einen beispielhaften Stromabnehmer mit einem Stromabnehmergestänge 1, welches einen Unterarm 2, einen Oberarm 3, eine Scheitelstange 4 mit einem ersten Auflaufhorn 5 und einem nicht sichtbaren zweiten Auflaufhorn, eine Parallelführungsstange 6 sowie eine Kuppelstange 7 aufweist. Der Unterarm 2 sowie die Kuppelstange 7 sind gelenkig mit einem Grundrahmen 8 verbunden, welcher über einen ersten Stützisolator 9, einen zweiten Stützisolator 10 sowie einen nicht sichtbaren dritten Stützisolator mit einem Dach 11 eines Schienenfahrzeugs verbunden ist. Zwischen dem Grundrahmen 8 und dem Unterarm 2 ist ein pneumatischer Hebeantrieb 12 zum Heben und Senken des Stromabnehmers vorgesehen.

Der Oberarm 3 ist gelenkig mit dem Unterarm 2 sowie gelenkig mit der Kuppelstange 7 verbunden, die Parallelführungsstange 6 gelenkig mit dem Unterarm 2.

Auf das Stromabnehmergestänge 1 ist eine erfindungsgemäße Wippe aufgesetzt, welche eine erste Schleifleiste 13, eine zweite Schleifleiste 14, eine erste Hebelanordnung 15, eine in Fig. 2 sichtbare zweite Hebelanordnung 16 eine dritte Hebelanordnung 17 sowie eine nicht sichtbare vierte Hebelanordnung aufweist. Weiterhin umfasst die Wippe eine erste Lagervorrichtung 18 und eine in Fig. 2 sichtbare zweite Lagervorrichtung 19, über welche die Wippe gelenkig mit der Scheitelstange 4, d.h. mit dem Stromabnehmergestänge 1, verbunden ist.

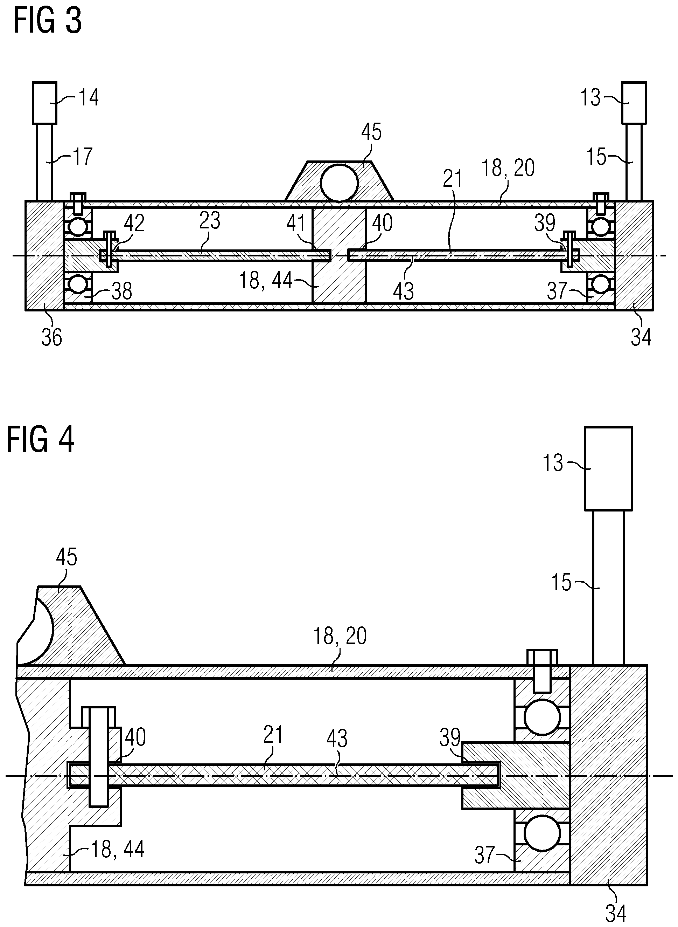

Innerhalb eines ersten Gehäuses 20 der ersten Lagervorrichtung 18 und eines zweiten Gehäuses der zweiten Lagervorrichtung 19 sind eine erste Torsionsfeder 21 und eine zweite Torsionsfeder 22, welche in Fig. 2 gezeigt sind, eine dritte Torsionsfeder 23, welche in Fig. 3 dargestellt ist, sowie eine nicht sichtbare vierte Torsionsfeder angeordnet, welche die erste Hebelanordnung 15, die zweite Hebelanordnung 16, die dritte Hebelanordnung 17 und die vierte Hebelanordnung einerseits sowie die erste Lagervorrichtung 18 und die zweite Lagervorrichtung 19 andererseits miteinander verbinden.

Die Wippe ist weiterhin gelenkig mit der Parallelführungsstange 6 verbunden und liegt über die erste Schleifleiste 13 und die zweite Schleifleiste 14, welche aus dem Stand der Technik bekannte, nicht dargestellte Kohleschleifstücke aufweisen, an einem Fahrdraht 24 an, wodurch das Schienenfahrzeug mit Elektrizität versorgt wird.

Die erste Schleifleiste 13 und die zweite Schleifleiste 14 sind parallel zu einer Fahrzeugquerachse 25, welche in Fig. 1 projizierend erscheint, ausgerichtet. Die erste Lagervorrichtung 18 und die zweite Lagervorrichtung 19 sind parallel zu einer Fahrzeuglängsachse 26 ausgerichtet, d.h. aufgrund der ersten Hebelanordnung 15, der zweiten Hebelanordnung 16, der dritten Hebelanordnung 17 und der vierten Hebelanordnung um 90° zu der ersten Schleifleiste 13 und der zweiten Schleifleiste 14 verdreht.

In Fig. 2 ist eine beispielhafte erste Ausführungsvariante einer erfindungsgemäßen Wippe als schematischer erster Seitenriss offenbart.

Die Wippe ist für einen beispielsweise in Fig. 1 gezeigten Stromabnehmer eines Schienenfahrzeugs vorgesehen und umfasst eine erste Schleifleiste 13 sowie eine in Fig. 1 und Fig. 3 gezeigte zweite Schleifleiste 14.

Weiterhin weist die Wippe eine erste Hebelanordnung 15, eine zweite Hebelanordnung 16, eine ein Fig. 3 gezeigte dritte Hebelanordnung 17 sowie eine nicht sichtbare vierte Hebelanordnung auf. Darüber hinaus umfasst die Wippe eine erste Lagervorrichtung 18 und eine zweite Lagervorrichtung 19, welche mit der ersten Hebelanordnung 15, der zweiten Hebelanordnung 16, der dritten Hebelanordnung 17 sowie der vierten Hebelanordnung gekoppelt sind.

Die erste Hebelanordnung 15 weist einen ersten Hebel 27 und einen zweiten Hebel 28 auf, die zweite Hebelanordnung 16 einen dritten Hebel 29 und einen vierten Hebel 30.

Der erste Hebel 27 ist über ein erstes Drehgelenk 31 mit der ersten Schleifleiste 13 verbunden, der zweite Hebel 28 über ein zweites Drehgelenk 32 mit dem ersten Hebel 27. Der zweite Hebel 28 ist mittels Verschraubung weiterhin fest, d.h. unverschieblich und drehfest mit einer ersten Aufnahmevorrichtung 34 verbunden, diese wiederum drehbar mit einem in Fig. 3 gezeigten ersten Gehäuse 20 der ersten Lagervorrichtung 18.

Der dritte Hebel 29 ist mittels Verschraubung fest mit der ersten Schleifleiste 13 verbunden, der vierte Hebel 30 über ein drittes Drehgelenk 33 mit dem dritten Hebel 29. Der vierte Hebel 30 ist weiterhin fest mit einer zweiten Aufnahmevorrichtung 35 verbunden, diese wiederum drehbar mit einem nicht gezeigten zweiten Gehäuse der zweiten Lagervorrichtung 19.

Die zweite Schleifleiste 14 des Stromabnehmers ist über die dritte Hebelanordnung 17 und über eine in Fig. 3 gezeigte dritte Aufnahmevorrichtung 36 mit der ersten Lagervorrichtung 18 sowie über die vierte Hebelanordnung und eine nicht sichtbare vierte Aufnahmevorrichtung mit der zweiten Lagervorrichtung 19 verbunden.

Die zweite Schleifleiste 14, die dritte Hebelanordnung 17, die vierte Hebelanordnung, die dritte Aufnahmevorrichtung 36 und die vierte Aufnahmevorrichtung sind in ihrer Anordnung zueinander sowie konstruktiv gleich ausgeführt wie die erste Schleifleiste 13, die erste Hebelanordnung 15, die zweite Hebelanordnung 16, die erste Aufnahmevorrichtung 34 und die zweite Aufnahmevorrichtung 35, jedoch in Bezug auf die erste Schleifleiste 13, die erste Hebelanordnung 15, die zweite Hebelanordnung 16, die erste Aufnahmevorrichtung 34 und die zweite Aufnahmevorrichtung 35 um 180° verdreht mit dem ersten Gehäuse 20 und dem zweiten Gehäuse verbunden.

Innerhalb des ersten Gehäuses 20 ist eine erste Torsionsfeder 21 vorgesehen und mittels Verschraubung fest mit der ersten Aufnahmevorrichtung 34, und somit fest mit dem zweiten Hebel 28 der ersten Hebelanordnung 15, verbunden.

Innerhalb des zweiten Gehäuses ist eine zweite Torsionsfeder 22 vorgesehen und mittels Verschraubung fest mit der zweiten Aufnahmevorrichtung 35, und somit mit dem vierten Hebel 30 der zweiten Hebelanordnung 16, verbunden.

Eine weiterhin in dem ersten Gehäuse 20 angeordnete, in Fig. 3 gezeigte dritte Torsionsfeder 23 ist mit der dritten Aufnahmevorrichtung 36 verschraubt und somit fest mit einem Hebel der dritten Hebelanordnung 17 verbunden.

Eine weiterhin in dem zweiten Gehäuse angeordnete, nicht sichtbare vierte Torsionsfeder ist mit der vierten Aufnahmevorrichtung verschraubt und somit fest mit einem Hebel der vierten Hebelanordnung verbunden.

Die erste Torsionsfeder 21, die zweite Torsionsfeder 22, die dritte Torsionsfeder 23 und die vierte Torsionsfeder weisen rechteckige Querschnitte auf.

Die erste Torsionsfeder 21 und die dritte Torsionsfeder 23 sind drehfest über verschiebliche Lagerungen mit der ersten Lagervorrichtung 18 verbunden, die zweite Torsionsfeder 22 und die vierte Torsionsfeder drehfest über verschiebliche Lagerungen mit der zweiten Lagervorrichtung 19. Dies ist anhand der ersten Torsionsfeder 21 und der dritten Torsionsfeder 23 beispielhaft im Zusammenhang mit Fig. 3 beschrieben.

Die erste Torsionsfeder 21, die zweite Torsionsfeder 22, die dritte Torsionsfeder 23 und die vierte Torsionsfeder werden aufgrund ihrer festen und drehfesten Lagerungen unter Belastung verdrillt.

Die erste Torsionsfeder 21, die zweite Torsionsfeder 22, die dritte Torsionsfeder 23 und die vierte Torsionsfeder sind zugleich Drehmomentübertragevorrichtungen und Federvorrichtungen zwischen der ersten Hebelanordnung 15, der zweiten Hebelanordnung 16, der dritten Hebelanordnung 17 sowie der vierten Hebelanordnung einerseits und der ersten Lagervorrichtung 18 sowie der zweiten Lagervorrichtung 19 andererseits.

In Fig. 3 ist jene beispielhafte erste Ausführungsvariante einer erfindungsgemäßen Wippe eines Stromabnehmers eines Schienenfahrzeugs schematisch dargestellt, die auch in Fig. 1 und Fig. 2 gezeigt ist. Es werden daher teilweise gleiche Bezugszeichen verwendet.

Im Unterschied zu Fig. 2, die einen ersten Seitenriss der Wippe zeigt, ist in Fig. 3 ein geschnittener zweiter Seitenriss der Wippe dargestellt, welcher eine in Bezug auf den ersten Seitenriss um 90° verdrehte Ansicht der Wippe offenbart.

Die Wippe umfasst eine erste Schleifleiste 13, eine zweite Schleifleiste 14, eine erste Hebelanordnung 15, eine in Fig. 2 gezeigte zweite Hebelanordnung 16, eine dritte Hebelanordnung 17, eine nicht sichtbare vierte Hebelanordnung, eine erste Lagervorrichtung 18 sowie eine in Fig. 2 dargestellte zweite Lagervorrichtung 19, welche mit einer ersten Aufnahmevorrichtung 34, einer in Fig. 2 gezeigten zweiten Aufnahmevorrichtung 35, einer dritten Aufnahmevorrichtung 36 und einer nicht sichtbaren vierten Aufnahmevorrichtung verbunden sind.

Mit der ersten Aufnahmevorrichtung 34 ist eine erste Torsionsfeder 21, mit der zweiten Aufnahmevorrichtung 35 eine in Fig. 2 dargestellte zweite Torsionsfeder 22, mit der dritten Aufnahmevorrichtung 36 eine dritte Torsionsfeder 23 sowie mit der vierten Aufnahmevorrichtung eine nicht sichtbare vierte Torsionsfeder verbunden.

Die erste Schleifleiste 13 ist über die erste Hebelanordnung 15 mit der ersten Aufnahmevorrichtung 34 verbunden, wobei die erste Hebelanordnung 15 und die erste Aufnahmevorrichtung 34 miteinander verschraubt sind. Die erste Aufnahmevorrichtung 34 ist über ein erstes Wälzlager 37 drehbar mit einem hohlzylindrischen ersten Gehäuse 20 der ersten Lagervorrichtung 18 verbunden. Das erste Gehäuse 20 ist in einem Faserverbundwerkstoff ausgebildet und fungiert als Wippenkasten. Das erste Wälzlager 37 ist mit dem ersten Gehäuse 20 verschraubt.

Erfindungsgemäß ist es auch vorstellbar, dass das erste Gehäuse 20 in einem metallischen Werkstoff ausgebildet ist. Die erste Aufnahmevorrichtung 34 weist stirnseitig eine erste Nut 39 auf, in welche ein erstes Ende der in Federstahl ausgebildeten ersten Torsionsfeder 21 eingespannt und verschraubt ist.

Erfindungsgemäß ist es auch denkbar, die erste Torsionsfeder 21 beispielsweise in einem Faserverbundwerkstoff auszubilden.

Die erste Torsionsfeder 21 weist einen rechteckigen Querschnitt auf und ist über ihr zweites Ende drehfest, formschlüssig und in Richtung ihrer Längsachse 43 sowie in Richtung einer Längserstreckung der ersten Schleifleiste 13, d.h. in Richtung einer Breite der ersten Torsionsfeder 21 bzw. in einer Richtung quer zu der der Längsachse 43 verschieblich in einer zweiten Nut 40 eines metallischen, zylindrischen, der ersten Lagervorrichtung 18 zugeordneten Spannstücks 44 gelagert. Eine Höhe des rechteckigen Querschnitts der ersten Torsionsfeder 21 ist klein im Verhältnis zu einer Länge der ersten Torsionsfeder 21.

Die zweite Nut 40 ist an einer ersten Stirnseite des Spannstücks 44 ausgefräst. Eine entsprechende mechanische Bearbeitung des Spannstücks 44 im Bereich der zweiten Nut 40 bewirkt ein widerstandsarmes Ein- und Ausgleiten der ersten Torsionsfeder 21 in die zweite Nut 40 und aus der zweiten Nut 40.

Die erste Torsionsfeder 21 ist nach Verbindung der ersten Aufnahmevorrichtung 34 mit dem ersten Gehäuse 20 vorgespannt.

Es ist daher möglich, dass mechanische Spannungen in der ersten Torsionsfeder 21, d.h. eine mechanische Beanspruchung der ersten Torsionsfeder 21, abgebaut werden, wodurch die erste Torsionsfeder 21 einerseits entlastet wird und andererseits flexibel auf Belastungen aufgrund von Kontaktkräften zwischen der ersten Schleifleiste 13 und einem in Fig. 1 dargestellten Fahrdraht 24 reagiert.

Das Spannstück 44 ist mit dem ersten Gehäuse 20, d.h. mit der ersten Lagervorrichtung 18 über in Fig. 3 nicht sichtbare, aus dem Stand der Technik bekannte Befestigungsmittel mittels Verschraubung, d.h. lösbar, verbunden. Die Befestigungsmittel sind über entsprechende, ebenfalls nicht sichtbare Ausnehmungen in dem ersten Gehäuse 20 mit dem Spannstück 44 verbunden.

Aufgrund der Verschraubung des Spannstücks 44 mit der ersten Lagervorrichtung 18 und drehfester, verschieblicher Lagerung der ersten Torsionsfeder 21 in dem Spannstück 44 ist die erste Torsionsfeder 21 drehfest und verschieblich mit der ersten Lagervorrichtung 18 verbunden.

An einer zweiten Stirnseite des Spannstücks 44 ist eine dritte Nut 41 vorgesehen, über welche die dritte Torsionsfeder 23 drehfest und verschieblich mit der ersten Lagervorrichtung 18 verbunden ist. Die dritte Torsionsfeder 23 ist weiterhin mit einer dritten Aufnahmevorrichtung 36 mittels Einspannung in eine vierte Nut 42, welche stirnseitig in der dritten Aufnahmevorrichtung 36 vorgesehen ist, und Verschraubung verbunden. Die dritte Torsionsfeder 23 ist im Hinblick auf Werkstoff, Geometrie, Verbindungstechnik mit dem Spannstück 44 sowie mit der dritten Aufnahmevorrichtung 36 und Ausrichtung gleich wie die erste Torsionsfeder 21 ausgeführt.

Die dritte Torsionsfeder 23 weist die gleiche Längsachse 43 wie die erste Torsionsfeder 21 auf.

Die erste Torsionsfeder 21, die dritte Torsionsfeder 23 und das Spannstück 44 sind innerhalb des ersten Gehäuses 20 angeordnet.

Eine Gehäuselängsachse des ersten Gehäuses 20 und die Längsachse 43 der ersten Torsionsfeder 21 und der dritten Torsionsfeder 23 verlaufen ineinander.

Erfindungsgemäß ist es auch vorstellbar, auf die dritte Torsionsfeder 23 zu verzichten und die erste Torsionsfeder 21 mit der ersten Aufnahmevorrichtung 34 und der dritten Aufnahmevorrichtung 36 zu verbinden.

Die dritte Aufnahmevorrichtung 36 ist über ein zweites Wälzlager 38, welches wie das erste Wälzlager 37 mit dem ersten Gehäuse 20 verschraubt ist, drehbar mit dem ersten Gehäuse 20, d.h. mit der ersten Lagervorrichtung 18 verbunden.

Mit der dritten Aufnahmevorrichtung 36 ist die dritte Hebelanordnung 17 verschraubt.

Die dritte Hebelanordnung 17 ist wiederum mit der zweiten Schleifleiste 14 verbunden.

Das erste Gehäuse 20 ist mittels nicht sichtbarer, aus dem Stand der Technik bekannter Befestigungsmittel mit einem Haltestück 45 der ersten Lagervorrichtung 18 verschraubt. Über das Haltestück 45 ist die erste Lagervorrichtung 18 gelenkig mit einem ersten Scheitelstangen-Ende einer in Fig. 1 gezeigten Scheitelstange 4 des Stromabnehmers, d.h. mit einem Stromabnehmergestänge 1 verbunden.

Die zweite Lagervorrichtung 19 ist konstruktiv und bezüglich ihrer Verbindung mit der Scheitelstange 4 gleich wie die erste Lagervorrichtung 18 ausgebildet. Die zweite Lagervorrichtung 19 ist mit einem zweiten Scheitelstangen-Ende der Scheitelstange 4 gelenkig verbunden.

Das zweite Gehäuse und dessen Gehäuseinhalt mit der zweiten Torsionsfeder 22 und der vierten Torsionsfeder sind konstruktiv und funktional gleich wie das erste Gehäuse 20 und dessen Gehäuseinhalt ausgeführt.

Das zweite Gehäuse ist parallel zu dem ersten Gehäuse 20 angeordnet und ausgerichtet.

Zwischen der ersten Hebelanordnung 15 und der dritten Hebelanordnung 17 sowie zwischen der zweiten Hebelanordnung 16 und der vierten Hebelanordnung sind keinerlei Versteifungsrahmen etc. vorgesehen. Die erfindungsgemäße Wippe ist als rahmenlose Wippe bzw. als Wippe mit einzeln gefederten Schleifleisten ausgebildet.

In Fig. 4 ist ein Ausschnitt aus einer beispielhaften zweiten Ausführungsvariante einer erfindungsgemäßen Wippe eines Stromabnehmers eines Schienenfahrzeugs schematisch als geschnittener Seitenriss dargestellt.

Die beispielhafte zweite Ausführungsvariante einer erfindungsgemäßen Wippe ähnelt jener beispielhaften ersten Ausführungsvariante, welche beispielsweise in Fig. 3 gezeigt ist. Es werden in Fig. 4 daher teilweise gleiche Bezugszeichen wie in Fig. 3 verwendet.

Im Unterschied zu Fig. 3 zeigt Fig. 4 eine Wippe, bei welcher eine erste Torsionsfeder 21 drehfest über eine verschiebliche Lagerung mit einem Hebel einer ersten Hebelanordnung 15 sowie fest mit einer ersten Lagervorrichtung 18 verbunden ist. Nicht gezeigte, weitere Torsionsfedern sind auf gleiche Weise mit nicht dargestellten weiteren Hebelanordnungen und einer ebenfalls nicht gezeigten weiteren Lagervorrichtung verbunden.

Die erste Lagervorrichtung 18 und die weitere Lagervorrichtung weisen ein erstes Gehäuse 20 sowie ein weiteres Gehäuse auf, welche, im Unterschied zu der beispielhaften ersten Ausführungsvariante einer erfindungsgemäßen Wippe, in einem metallische Werkstoff ausgebildet sind.

Im Unterschied zu Fig. 3 sind die in Fig. 4 gezeigte erste Torsionsfeder 21 sowie die nicht gezeigten weiteren Torsionsfedern in einem Faserverbundwerkstoff ausgeführt.

### Liste der Bezeichnungen

- 1: Stromabnehmergestänge
- 2: Unterarm
- 3: Oberarm
- 4: Scheitelstange
- 5: Erstes Auflaufhorn
- 6: Parallelführungsstange
- 7: Kuppelstange
- 8: Grundrahmen
- 9: Erster Stützisolator
- 10: Zweiter Stützisolator
- 11: Dach
- 12: Hebeantrieb
- 13: Erste Schleifleiste
- 14: Zweite Schleifleiste
- 15: Erste Hebelanordnung
- 16: Zweite Hebelanordnung
- 17: Dritte Hebelanordnung
- 18: Erste Lagervorrichtung
- 19: Zweite Lagervorrichtung
- 20: Erstes Gehäuse
- 21: Erste Torsionsfeder
- 22: Zweite Torsionsfeder
- 23: Dritte Torsionsfeder
- 24: Fahrdraht
- 25: Fahrzeugquerachse
- 26: Fahrzeuglängsachse
- 27: Erster Hebel
- 28: Zweiter Hebel
- 29: Dritter Hebel
- 30: Vierter Hebel
- 31: Erstes Drehgelenk
- 32: Zweites Drehgelenk
- 33: Drittes Drehgelenk
- 34: Erste Aufnahmevorrichtung
- 35: Zweite Aufnahmevorrichtung
- 36: Dritte Aufnahmevorrichtung
- 37: Erstes Wälzlager
- 38: Zweites Wälzlager
- 39: Erste Nut
- 40: Zweite Nut
- 41: Dritte Nut
- 42: Vierte Nut
- 43: Längsachse
- 44: Spannstück
- 45: Haltestück

## Patentansprüche

1. Wippe für einen Stromabnehmer eines Fahrzeugs, mit zumindest einer ersten Schleifleiste (13), welche mit einer ersten Hebelanordnung (15), welche mit einer ersten Lagervorrichtung (18) gekoppelt ist, sowie mit einer zweiten Hebelanordnung (16), welche mit einer zweiten Lagervorrichtung (19) gekoppelt ist, verbunden ist, wobei die erste Lagervorrichtung und die zweite Lagervorrichtung gelenkig mit einem Stromabnehmergestänge (1) verbindbar sind, wobei die Wippe eine erste Torsionsfeder (21) aufweist, und wobei die erste Torsionsfeder (21) zugleich Drehmomentübertragevorrichtung und Federvorrichtung zwischen der ersten Hebelanordnung (15) und der ersten Lagervorrichtung (18) ist, **dadurch gekennzeichnet, dass** die erste Torsionsfeder (21) fest mit einem Hebel der ersten Hebelanordnung (15) sowie drehfest über eine verschiebliche Lagerung mit der ersten Lagervorrichtung (18) verbunden ist oder die erste Torsionsfeder (21) drehfest über eine verschiebliche Lagerung mit einem Hebel der ersten Hebelanordnung (15) sowie fest mit der ersten Lagervorrichtung (18) verbunden ist.

2. Wippe nach Anspruch 1, **dadurch gekennzeichnet, dass** die erste Torsionsfeder (21) im Bereich der verschieblichen Lagerung in Richtung einer Längsachse (43) der ersten Torsionsfeder (21) verschieblich ist.

3. Wippe nach Anspruch 1 oder 2, **dadurch gekennzeichnet, dass** die erste Torsionsfeder (21) im Bereich der verschieblichen Lagerung quer zu der Längsachse (43) verschieblich ist.

4. Wippe nach einem der Ansprüche 1 bis 3, **dadurch gekennzeichnet, dass** die erste Torsionsfeder (21) im Bereich der verschieblichen Lagerung in Richtung einer Breite der ersten Torsionsfeder (21) verschieblich ist.

5. Wippe nach einem der Ansprüche 1 bis 4, **dadurch gekennzeichnet, dass** die erste Torsionsfeder (21) im Bereich der verschieblichen Lagerung in Richtung einer Längserstreckung der zumindest ersten Schleifleiste (13) verschieblich ist.

6. Wippe nach einem der Ansprüche 1 bis 5, **dadurch gekennzeichnet, dass** die erste Torsionsfeder (21) formschlüssig und vorgespannt gelagert ist.

7. Wippe nach einem der Ansprüche 1 bis 6, **dadurch gekennzeichnet, dass** die erste Torsionsfeder (21) einen rechteckigen Querschnitt aufweist.

8. Wippe nach einem der Ansprüche 1 bis 7, **dadurch gekennzeichnet, dass** die erste Torsionsfeder (21) in einem Faserverbundwerkstoff ausgebildet ist.

9. Wippe nach einem der Ansprüche 1 bis 8, **dadurch gekennzeichnet, dass** die erste Lagervorrichtung (18) ein Spannstück (44) aufweist, mit welchem die erste Torsionsfeder (21) verbunden ist.

10. Wippe nach einem der Ansprüche 1 bis 9, **dadurch gekennzeichnet, dass** die erste Lagervorrichtung (18) ein erstes Gehäuse (20) aufweist, wobei die erste Torsionsfeder (21) innerhalb des ersten Gehäuses (20) angeordnet ist.

11. Wippe nach Anspruch 10, **dadurch gekennzeichnet, dass** das Spannstück (44) drehfest sowie lösbar mit dem ersten Gehäuse (20) verbunden ist und innerhalb des ersten Gehäuses (20) angeordnet ist.

12. Wippe nach Anspruch 10 oder 11, **dadurch gekennzeichnet, dass** eine erste Aufnahmevorrichtung (34) drehfest mit einem Hebel der ersten Hebelanordnung (15) und drehbar mit dem ersten Gehäuse (20) verbunden ist, wobei die erste Torsionsfeder (21) über die erste Aufnahmevorrichtung (34) mit der ersten Hebelanordnung (15) verbunden ist.

13. Wippe nach einem der Ansprüche 10 bis 12, **dadurch gekennzeichnet, dass** das erste Gehäuse (20) in einem Faserverbundwerkstoff ausgeführt ist.

14. Wippe nach einem der Ansprüche 1 bis 13, **dadurch gekennzeichnet, dass** die Wippe eine zweite Torsionsfeder aufweist, und dass die zweite Torsionsfeder (22) fest mit einem Hebel der zweiten Hebelanordnung (16) sowie drehfest über eine verschiebliche Lagerung mit der zweiten Lagervorrichtung (19) verbunden ist oder die zweite Torsionsfeder (22) drehfest über eine verschiebliche Lagerung mit einem Hebel der zweiten Hebelanordnung (16) sowie fest mit der zweiten Lagervorrichtung (19) verbunden ist, wobei die zweite Torsionsfeder (22) zugleich Drehmomentübertragevorrichtung und Federvorrichtung zwischen der zweiten Hebelanordnung (16) und der zweiten Lagervorrichtung (19) ist.

15. Wippe nach einem der Ansprüche 1 bis 14, **dadurch gekennzeichnet, dass** eine zweite Schleifleiste (14) vorgesehen ist, welche mit einer dritten Hebelanordnung (17), welche mit der ersten Lagervorrichtung (18) gekoppelt ist, sowie mit einer vierten Hebelanordnung, welche mit der zweiten Lagervorrichtung (19) gekoppelt ist, verbunden ist, wobei die erste Torsionsfeder (21) drehfest mit einem Hebel der dritten Hebelanordnung (17) verbunden ist.

16. Wippe nach einem der Ansprüche 1 bis 14, **dadurch gekennzeichnet, dass** eine zweite Schleifleiste (14) vorgesehen ist, welche mit einer dritten Hebelanordnung (17), welche mit der ersten Lagervorrichtung (18) gekoppelt ist, sowie mit einer vierten Hebelanordnung, welche mit der zweiten Lagervorrichtung (19) gekoppelt ist, verbunden ist, wobei die Wippe eine dritte Torsionsfeder (23) aufweist, und die dritte Torsionsfeder (23), welche zugleich Drehmomentübertragevorrichtung und Federvorrichtung zwischen der dritten Hebelanordnung (17) und der ersten Lagervorrichtung (18) ist, fest mit einem Hebel der dritten Hebelanordnung (17) sowie drehfest über eine verschiebliche Lagerung mit der ersten Lagervorrichtung (18) verbunden ist oder drehfest über eine verschiebliche Lagerung mit einem Hebel der dritten Hebelanordnung (17) sowie fest mit der ersten Lagervorrichtung (18) verbunden ist.

17. Wippe nach Anspruch 16, **dadurch gekennzeichnet, dass** die dritte Torsionsfeder (23) mit dem Spannstück (44) verbunden ist.

18. Wippe nach einem der Ansprüche 15 oder 16, wenn abhängig von Anspruch 14, oder nach Anspruch 17, **dadurch gekennzeichnet, dass** die zweite Torsionsfeder (22) oder eine von der Wippe umfasste vierte Torsionsfeder, welche zugleich Drehmomentübertragevorrichtung und Federvorrichtung zwischen der vierten Hebelanordnung und der zweiten Lagervorrichtung (19) ist, fest mit einem Hebel der vierten Hebelanordnung sowie drehfest über eine verschiebliche Lagerung mit der zweiten Lagervorrichtung (19) verbunden ist oder drehfest über eine verschiebliche Lagerung mit einem Hebel der vierten Hebelanordnung sowie fest mit der zweiten Lagervorrichtung (19) verbunden ist.

19. Stromabnehmer mit einer Wippe nach einem der Ansprüche 1 bis 18.

20. Fahrzeug mit einem Stromabnehmer nach Anspruch 19.

## Claims

1. Rocker for a current collector of a vehicle, said rocker having at least one first contact strip (13) which is connected to a first lever arrangement (15), which is coupled to a first bearing device (18), and to a second lever arrangement (16), which is coupled to a second bearing device (19), wherein the first bearing device and the second bearing device are connectable in an articulated manner to a current collector linkage (1), wherein the rocker has a first torsion spring (21) and wherein the first torsion spring (21) is at the same time the torque transmission device and spring device between the first lever arrangement (15) and the first bearing device (18), **characterised in that** the first torsion spring (21) is fixedly connected to a lever of the first lever arrangement (15) as well as non-rotatably via a displaceable bearing to the first bearing device (18) or the first torsion spring (21) is connected non-rotatably via a displaceable bearing to a lever of the first lever arrangement (15) and fixedly to the first bearing device (18).

2. Rocker according to claim 1, **characterised in that** the first torsion spring (21) is displaceable in the region of the displaceable bearing in the direction of a longitudinal axis (43) of the first torsion spring (21).

3. Rocker according to claim 1 or 2, **characterised in that** the first torsion spring (21) is displaceable in the region of the displaceable bearing transversely to the longitudinal axis (43) .

4. Rocker according to one of claims 1 to 3, **characterised in that** the first torsion spring (21) is displaceable in the region of the displaceable bearing in the direction of a width of the first torsion spring (21).

5. Rocker according to one of claims 1 to 4, **characterised in that** the first torsion spring (21) is displaceable in the region of the displaceable bearing in the direction of a longitudinal extension of the at least first contact strip (13) .

6. Rocker according to one of claims 1 to 5, **characterised in that** the first torsion spring (21) is mounted in a positive-locking and pretensioned manner.

7. Rocker according to one of claims 1 to 6, **characterised in that** the first torsion spring (21) has a rectangular cross-section.

8. Rocker according to one of claims 1 to 7, **characterised in that** the first torsion spring (21) is implemented in a fibre-reinforced composite material.

9. Rocker according to one of claims 1 to 8, **characterised in that** the first bearing device (18) has a clamping element (44) to which the first torsion spring (21) is connected.

10. Rocker according to one of claims 1 to 9, **characterised in that** the first bearing device (18) has a first housing (20), wherein the first torsion spring (21) is arranged inside the first housing (20).

11. Rocker according to claim 10, **characterised in that** the clamping element (44) is connected in a non-rotatable and detachable manner to the first housing (20) and is arranged inside the first housing (20).

12. Rocker according to claim 10 or 11, **characterised in that** a first mounting device (34) is connected non-rotatably to a lever of the first lever arrangement (15) and rotatably to the first housing (20), wherein the first torsion spring (21) is connected to the first lever arrangement (15) via the first mounting device (34).

13. Rocker according to one of claims 10 to 12, **characterised in that** the first housing (20) is implemented in a fibre-reinforced composite material.

14. Rocker according to one of claims 1 to 13, **characterised in that** the rocker has a second torsion spring and the second torsion spring (22) is fixedly connected to a lever of the second lever arrangement (16) and non-rotatably via a displaceable bearing to the second bearing device (19) or the second torsion spring (22) is connected non-rotatably via a displaceable bearing to a lever of the second lever arrangement (16) and fixedly to the second bearing device (19), wherein the second torsion spring (22) is at the same time a torque transmission device and a spring device between the second lever arrangement (16) and the second bearing device (19).

15. Rocker according to one of claims 1 to 14, **characterised in that** a second contact strip (14) is provided which is connected to a third lever arrangement (17), which is coupled to the first bearing device (18), and also to a fourth lever arrangement, which is coupled to the second bearing device (19), wherein the first torsion spring (21) is non-rotatably connected to a lever of the third lever arrangement (17).

16. Rocker according to one of claims 1 to 14, **characterised in that** a second contact strip (14) is provided which is connected to a third lever arrangement (17), which is coupled to the first bearing device (18), and also to a fourth lever arrangement, which is coupled to the second bearing device (19), wherein the rocker has a third torsion spring (23) and the third torsion spring (23), which is at the same time a torque transmission device and a spring device between the third lever arrangement (17) and the first bearing device (18), is fixedly connected to a lever of the third lever arrangement (17) as well as non-rotatably via a displaceable bearing to the first bearing device (18) or is non-rotatably connected via a displaceable bearing to a lever of the third lever arrangement (17) as well as fixedly to the first bearing device (18).

17. Rocker according to claim 16, **characterised in that** the third torsion spring (23) is connected to the clamping element (44) .

18. Rocker according to one of claims 15 or 16 if dependent on claim 14, or according to claim 17, **characterised in that** the second torsion spring (22) or a fourth torsion spring included in the rocker, which is at the same time a torque transmission device and a spring device between the fourth lever arrangement and the second bearing device (19), is fixedly connected to a lever of the fourth lever arrangement as well as non-rotatably via a displaceable bearing to the second bearing device (19) or non-rotatably via a displaceable bearing to a lever of the fourth lever arrangement as well as fixedly to the second bearing device (19).

19. Current collector having a rocker according to one of claims 1 to 18.

20. Vehicle having a current collector according to claim 19.

## Revendications

1. Bascule pour un pantographe d'un véhicule, comprenant au moins une première barre de frottement (13) reliée à un premier ensemble de levier (15) couplé à un premier dispositif de palier (18), et à un deuxième ensemble de levier (16) couplé à un deuxième dispositif de palier (19), dans laquelle le premier dispositif de palier et le deuxième dispositif de palier peuvent être reliés de manière articulée à une tringlerie de pantographe (1), dans laquelle la bascule présente un premier ressort de torsion (21), et dans laquelle le premier ressort de torsion (21) est en même temps un dispositif de transmission de couple et un dispositif à ressort entre le premier ensemble de levier (15) et le premier dispositif de palier (18), **caractérisée en ce que** le premier ressort de torsion (21) est relié de manière fixe à un levier du premier ensemble de levier (15) ainsi que de manière solidaire en rotation au premier dispositif de palier (18) par l'intermédiaire d'un palier mobile ou le premier ressort de torsion (21) est relié de manière solidaire en rotation à un levier du premier ensemble de levier (15) par l'intermédiaire d'un palier mobile ainsi que de manière fixe au premier dispositif de palier (18).

2. Bascule selon la revendication 1, **caractérisée en ce que** le premier ressort de torsion (21) est déplaçable dans la zone du palier mobile dans la direction d'un axe longitudinal (43) du premier ressort de torsion (21).

3. Bascule selon la revendication 1 ou 2, **caractérisée en ce que** le premier ressort de torsion (21) est déplaçable transversalement à l'axe longitudinal (43) dans la zone du palier déplaçable.

4. Bascule selon l'une des revendications 1 à 3, **caractérisée en ce que** le premier ressort de torsion (21) est déplaçable dans la zone du palier mobile dans la direction d'une largeur du premier ressort de torsion (21).

5. Bascule selon l'une des revendications 1 à 4, **caractérisée en ce que** le premier ressort de torsion (21) est déplaçable dans la zone du palier mobile dans la direction d'une extension longitudinale de la au moins une première barre de frottement (13).

6. Bascule selon l'une des revendications 1 à 5, **caractérisée en ce que** le premier ressort de torsion (21) est monté par complémentarité de forme et sous précontrainte.

7. Bascule selon l'une des revendications 1 à 6, **caractérisée en ce que** le premier ressort de torsion (21) présente une section transversale rectangulaire.

8. Bascule selon l'une des revendications 1 à 7, **caractérisée en ce que** le premier ressort de torsion (21) est réalisé dans un matériau composite à base de fibres.

9. Bascule selon l'une des revendications 1 à 8, **caractérisée en ce que** le premier dispositif de palier (18) présente une pièce de serrage (44) à laquelle est relié le premier ressort de torsion (21).

10. Bascule selon l'une des revendications 1 à 9, **caractérisée en ce que** le premier dispositif de palier (18) présente un premier boîtier (20), dans laquelle le premier ressort de torsion (21) est disposé à l'intérieur du premier boîtier (20).

11. Bascule selon la revendication 10, **caractérisée en ce que** la pièce de serrage (44) est reliée de manière solidaire en rotation et de manière amovible au premier boîtier (20) et est disposée à l'intérieur du premier boîtier (20).

12. Bascule selon la revendication 10 ou 11, **caractérisée en ce qu'**un premier dispositif de réception (34) est relié de manière solidaire en rotation à un levier du premier ensemble de levier (15) et de manière rotative au premier boîtier (20), dans laquelle le premier ressort de torsion (21) est relié au premier ensemble de levier (15) par l'intermédiaire du premier dispositif de réception (34).

13. Bascule selon l'une des revendications 10 à 12, **caractérisée en ce que** le premier boîtier (20) est réalisé dans un matériau composite à base de fibres.

14. Bascule selon l'une des revendications 1 à 13, **caractérisée en ce que** la bascule présente un deuxième ressort de torsion, et **en ce que** le deuxième ressort de torsion (22) est relié fixement à un levier du deuxième ensemble de levier (16) ainsi que solidairement en rotation au deuxième dispositif de palier (19) par l'intermédiaire d'un palier mobile, ou le deuxième ressort de torsion (22) est relié solidairement en rotation à un levier du deuxième ensemble de levier (16) par l'intermédiaire d'un palier mobile, ainsi que fixement au deuxième dispositif de palier (19), dans laquelle le deuxième ressort de torsion (22) est à la fois un dispositif de transmission de couple et un dispositif à ressort entre le deuxième ensemble de levier (16) et le deuxième dispositif de palier (19).

15. Bascule selon l'une des revendications 1 à 14, **caractérisée en ce qu'**une deuxième barre de frottement (14) qui est reliée à un troisième ensemble de levier (17) qui est couplé au premier dispositif de palier (18) ainsi qu'à un quatrième ensemble de levier qui est couplé au deuxième dispositif de palier (19), dans laquelle le premier ressort de torsion (21) est relié de manière solidaire en rotation à un levier du troisième ensemble de levier (17).

16. Bascule selon l'une des revendications 1 à 14, **caractérisée en ce qu'**une deuxième barre de frottement (14) qui est reliée à un troisième ensemble de levier (17) qui est couplé au premier dispositif de palier (18) ainsi qu'à un quatrième ensemble de levier qui est couplé au deuxième dispositif de palier (19), dans laquelle la bascule présente un troisième ressort de torsion (23), et le troisième ressort de torsion (23), qui est à la fois un dispositif de transmission de couple et un dispositif à ressort entre le troisième ensemble de levier (17) et le premier ensemble de palier (18), est relié de manière fixe à un levier du troisième ensemble de levier (17) ainsi que de manière solidaire en rotation au premier ensemble de palier (18) par l'intermédiaire d'un palier mobile ou est relié de manière solidaire en rotation à un levier du troisième ensemble de levier (17) par l'intermédiaire d'un palier mobile ainsi que de manière fixe au premier ensemble de palier (18).

17. Bascule selon la revendication 16, **caractérisée en ce que** le troisième ressort de torsion (23) est relié à la pièce de serrage (44).

18. Bascule selon la revendication 15 ou 16, si dépendante de la revendication 14, ou selon la revendication 17, **caractérisée en ce que** le deuxième ressort de torsion (22) ou un quatrième ressort de torsion entouré par la bascule, qui est en même temps un dispositif de transmission de couple et un dispositif à ressort entre le quatrième ensemble de levier et le deuxième dispositif de palier (19), est relié de manière fixe à un levier du quatrième ensemble de levier ainsi que de manière solidaire en rotation au deuxième dispositif de palier (19) par l'intermédiaire d'un palier mobile, ou est relié de manière solidaire en rotation à un levier du quatrième ensemble de levier par l'intermédiaire d'un palier mobile ainsi que de manière fixe au deuxième dispositif de palier (19).

19. Pantographe avec une bascule selon l'une des revendications 1 à 18.

20. Véhicule avec un pantographe selon la revendication 19.
